# EUROPÄISCHE PATENTANMELDUNG

(11) **EP 3 014 984 A1**
(43) Veröffentlichungstag der Anmeldung: **04.05.2016**
(21) Anmeldenummer: 15187295.9
(22) Anmeldetag: 29.09.2015
(51) Int. Cl.: A01G 27/00

(54) **BODENBEFEUCHTUNGSSYSTEM**

(30) Priorität: 30.10.2014 DE 102014115758
(71) Anmelder: Albrecht, Franz, 71691 Freiberg a. N. (DE); Reiber, Stefan, 71691 Freiberg a. N. (DE); Streichan, Christian Peter, 74855 Hassmersheim (DE)
(72) Erfinder: Albrecht, Franz, 71691 Freiberg a. N. (DE)
(74) Vertreter: Wendels, Stefan

(57) **Zusammenfassung**

Die Erfindung betrifft ein Modular erweiterbares Bodenbefeuchtungssytem aus wenigstens einem Dispenser (1) mit einem in die Erde einsteckbaren Befeuchtungskegel (2) zur Bewässerung von erdeingepflanzten Pflanzen bestehend aus einer Adapterkupplung (10), die im erdeingesteckten Zustand bestimmungsgemäß oberirdisch angeordnet ist, ausgebildet mit einem kragenförmigen Einsteckabschnitt (11) in den der Bewässerungskegel (2) den Einsteckabschnitt (11) abdichtend eingesetzt ist, wobei die Adapterkupplung (10) wenigstens einen seitlich angeordneten Zulaufstutzen (12) mit einem Schlauchanschlussteil (13) für die Zuführung von Wasser von einer externen Wasservorratsquelle (20) aufweist und wobei die Adapterkupplung (10) wenigstens einen seitlichen Auslaufstutzen (22) mit einem Schlauchanschlussteil (23) zur Weiterleitung von Wasser aufweist und wobei die Adapterkupplung (10) ein Deckelabschnitt (14) besitzt in dem ein Luftdosierungsregler (14) eingebracht ist.

## Beschreibung

Die Erfindung betrifft ein Bodenbefeuchtungssytem mit den Merkmalen von Anspruch 1. Die Erfindung betrifft daher insbesondere ein Befeuchtungssytem zur Bodenbewässerung für Pflanzen aller Art.

Es gibt im Stand der Technik Giesssysteme und Bodenbefeuchtungssysteme zur Bewässerung von Pflanzen. Bei Giesssystemen wird Wasser oberirdisch oder oberflächennah aus Düsensystemen oder dergleichen verteilt. Das Wasser verdampft dabei teilweise, sickert ggf. nur langsam ein und führt in der Regel zu einer unbefriedigenden Bodenbefeuchtung, wenn nicht verschwenderisch mit Wasser umgegangen werden soll. Bei Bodenbefeuchtungssystemen liegt das Ziel den Boden unterirdisch in Wurzelnähe kontinuierlich oder jedenfalls regelmäßig zu befeuchten.

Die vorliegende Erfindung beschäftigt sich mit Bodenbefeuchtungssystemen.

Im Stand der Technik ist aus der DE 10 2012 017 678 A1 eine Wasserfüllpatro-ne zur Bewässerung von Pflanzen bekannt. Hierbei ist eine zumindest teilweise durchsichtige zylindrische Flasche mit einem Kegelelement verschraubbar oder steckbar vorgesehen, als Wasservorratsspeicher.

Diese Wasserfüllpatrone kann sowohl bei kleinen als auch bei großen Pflanzen eingesetzt werden. Die Wasserfüllpatrone kann ferner in verschiedenen Größen hergestellt werden und für Balkonkästen sowie Pflanzenbeete im Garten verwendet werden u. s. w. Allerdings besteht der Bedarf bei vielen zu bewässernden Pflanzen ein bedarf nach einem einfachen und kostengünstigen, aber dennoch effektiven Bewässerungssystem. Sind zum Beispiel ganze Gärten oder ganze Pflanzen-Kolonien mit Bodenwasser zu versorgen, so müssten eine Vielzahl von Wasserfüllpatronen eingesetzt werden.

Weiter nachteilhaft ist es, wenn eine Vielzahl von Wasserfüllpatronen verwendet wird, dass diese erheblich aus der Erde hervorstehen und als hinderlich betrachtet werden könnten. Neben dem Umstand, dass diese störend sein können, besteht auch die Gefahr der Beschädigung, wenn eine Person unachtsam ist und auf die Flaschen der Wasserfüllpatrone tritt.

Vor diesem Hintergrund ist es Aufgabe der vorliegenden Erfindung vorbesagte Nachteile zu vermeiden und ein modular erweiterbares Bewässerungssystem zur Bodenbefeuchtung, sowie einen Dispenser (Bodenbefeuchter) für ein solches Bewässerungssystem vorzuschlagen, die einfach und kostengünstig einsetzbar sind, aber dennoch effizient in ihrer Wirkungsweise.

Diese Aufgabe wird gelöst mit einem Bewässerungssystem zur Bodenbefeuchtung mit den Merkmalen von Anspruch 1.

Grundgedanke der vorliegenden Erfindung ist es dabei, einen oder eine Vielzahl von flachbauenden Dispenser vorzusehen, die ohne eigenen Wasservorrastspeicher ausgebildet sind und daher auch keine Einfüllöffnung hierzu benötigen. Vielmehr soll der erfindungsgemäße Dispenser zur lokalen Bodenbefeuchtung über einen Befeuchtungskegel verfügen, der an einer Adapterkupplung befestigt ist und zwar dichtend. Die Adapterkupplung ist damit die Verteilzentrale für Wasser, das von einer externen Wasserquelle zu einem Einlaufstutzen des Dispensers gefördert wird und von dort über den Befeuchtungskegel einerseits an den Boden abgegeben wird und über eine oder optional mehrere Auslaufstutzen zu anderen Dispensern weiter befördert werden kann. Auf diese Weise kann die Adapterkupplung flach bauend so gestaltet werden, dass diese im erdeingesteckten Zustand des Dispensers nur unwesentlich d.h. nicht störend aus der Oberfläche der Erde hervorsteht. Der Dispenser kann ferner in verschiedenen Größen hergestellt werden und für Balkonkästen sowie Pflanzenbeete im Garten und insbesondere bei einer Vernetzung über ein Schlauchsystem universell im Land- und Gartenbau verwendet werden.

Erfindungsgemäß wird demnach ein modular erweiterbares Bodenbefeuchtungssytem aus wenigstens einem, vorzugsweise einer Vielzahl von Dispensern bereitgestellt mit jeweils einem in die Erde einsteckbaren Befeuchtungskegel zur Bewässerung von erdeingepflanzten Pflanzen bestehend aus einer Adapterkupplung, die im erdeingesteckten Zustand bestimmungsgemäß oberirdisch angeordnet ist, ausgebildet mit einem kragenförmigen Einsteckabschnitt in den der Bewässerungskegel den Einsteckabschnitt abdichtend eingesetzt ist, wobei die Adapterkupplung wenigstens einen seitlich angeordneten Zulaufstutzen mit einem Schlauchanschlussteil für die Zuführung von Wasser von einer externen Wasservorratsquelle aufweist und wobei die Adapterkupplung wenigstens einen seitlichen Auslaufstutzen mit einem Schlauchanschlussteil zur Weiterleitung von Wasser aufweist und wobei die Adapterkupplung ein Deckelabschnitt besitzt in dem ein Luftdosierungsregler eingebracht ist.

Mit Vorteil wird ferner ein Bodenbefeuchtungssytem aus einer Mehrzahl von Dispensern, die mit Schläuchen miteinander verbunden sind, vorgeschlagen, um eine Vielzahl von Pflanzen gleichzeitig über eine oder wenige Wasserspei-cher mit Bodenwasser versorgen zu können.

Weiter vorteilhaft ist es, wenn das Bodenbefeuchtungssytem als externe Wasservorrastquelle wenigstens eine Wasserfüllpatrone mit einem Auslaufstutzen aufweist, die mit wenigstens einem Zulaufstutzen eines Dispensers über einen Schlauch zur Zuführung von Wasser fließwirksam verbunden ist.

In einer vorteilhaften Weiterbildung der Erfindung weist der Befeuchtungskegel eine wasserdurchlässige Wand im Wesentlichen über die gesamte Höhe H_{K} auf und definiert diese Höhe die mögliche Einstecktiefe des Befeuchtungskegels in die Erde. Als Kegelmaterial eignet sich ein wasserdurchlässiger Stein- oder Tonkegel.

Mit Vorteil ist die Höhe H_{K} des Befeuchtungskegels etwa 3 bis 5 Mal so hoch wie die Höhe Hₐ der Adapterkupplung. Auf diese Weise kann eine kompakte Bauweise mit einer dennoch guten Wasserversorgung des Bodens mit einer großen effektiven Oberfläche erzielt werden, bei gleichzeitig geringer Bauhöhe oberhalb der Erdoberfläche (im erdeingesteckten Zustand). Weiter vorteilhaft ist es dabei, wenn die Adapterkupplung insgesamt flachbauend ausgebildet ist und die Höhe Hₐ der Adapterkupplung etwa 1 cm bis 5 cm ist, so dass die Adapterkupplung im vollständig erdeingesteckten Zustand des Befeuchtungskegels nur etwas oberhalb der Oberfläche der Erde gelegen ist. Ferner kann vorgesehen werden, dass Adapterkupplung einen Durchmesser D aufweist, der in etwa 0,8 bis 1,2 x der Höhe Hₐ der der Adapterkupplung entspricht.

In einer vorteilhaften Ausbildung weist die Adapterkupplung eine im Wesentlichen zylinderförmige, umfangsgeschlossene Form auf und ist die Adapterkupplung aus Kunststoff oder Metall, vorzugsweise aus lichtundurchlässigem Material, so dass die Keimlingsbildung minimiert werden kann.

Es ist weiter vorteilhaft, wenn der oder die Zulaufstutzen und/oder der oder die Auslaufstutzen der Adapterkupplung im oberen Drittel (in Höhenrichtung) der Adapterkupplung, somit knapp unterhalb des Deckelabschnittes der Adapterkupplung angeordnet sind, der im Wesentlichen über die gesamte Oberfläche flach ausgebildet ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig.1: eine Schnittansicht durch ein erstes Ausführungsbeispiel eines Dispensers des erfindungsgemäßen Bewässerungssystems und
- Fig.2: eine Aufsicht auf ein alternatives Ausführungsbeispiel eines Dispensers des erfindungsgemäßen Bewässerungssystems.

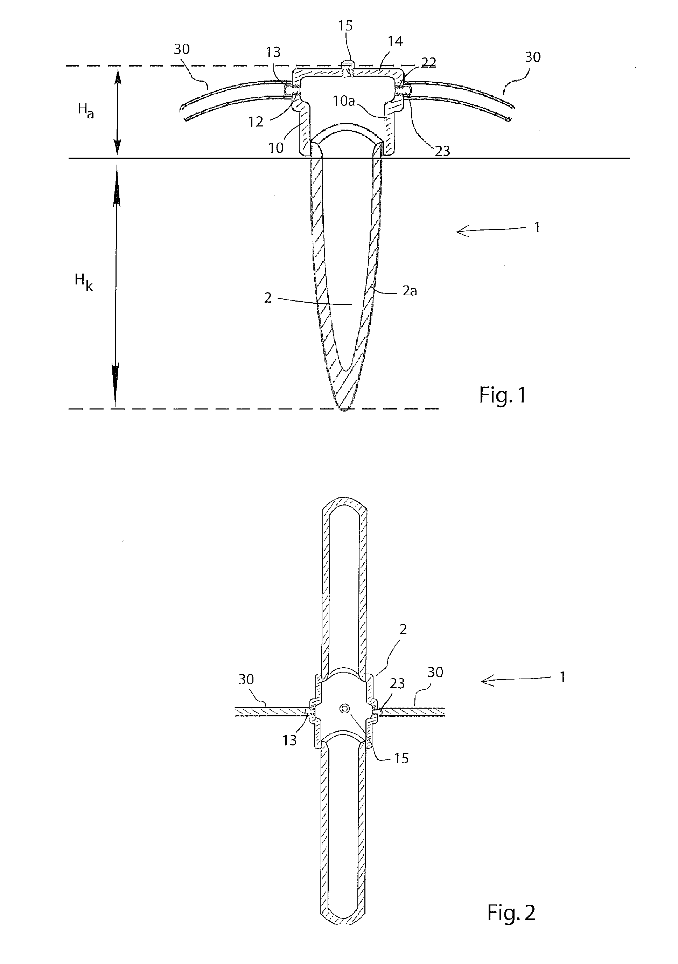

Im Folgenden werden die beiden Figuren 1 und 2 zusammen beschrieben, da sich gleiche Bezugszeichen auf gleiche Merkmale oder Elemente der gezeigten Dispenser beziehen.

Die Dispenser 1 sind Teil eines modular erweiterbares Bodenbefeuchtungssytem mit einem in die Erde einsteckbaren Befeuchtungskegel 2 zur Bewässerung von erdeingepflanzten Pflanzen bestehend aus einer Adapterkupplung 10, die im erdeingesteckten Zustand bestimmungsgemäß oberirdisch angeordnet ist.

Die Adapterkupplung 10 ist ausgebildet mit einem kragenförmigen Einsteckabschnitt 11 in den der Bewässerungskegel 2 bzw. der Befeuchtungskegel 2 den Einsteckabschnitt 11 abdichtend eingesetzt ist. Der Einsteckabschnitt 11 weist demzufolge einen vertikal umlaufenden Kragen 10a auf in den der Befeuchtungskegel 2 mit seinem oberen offenen Ende eingesetzt ist. Der Befeuchtungskegel 2 ist als innen hohler Kegel ausgebildet mit einer wasserdurchlässigen Wand 2a.

Die Adapterkupplung weist einen seitlich angeordneten Zulaufstutzen 12 mit einem Schlauchanschlussteil 13 auf, in den hier ein Schlauch 30 eingesteckt ist und zwar für die Zuführung von Wasser von einer externen Wasservorratsquel-le 20.

Die Adapterkupplung 10 weist ferner einen seitlichen Auslaufstutzen 22 mit einem Schlauchanschlussteil 23 zur Weiterleitung von Wasser auf, in die ebenfalls ein Schlauch 30 eingesteckt ist.

Die Adapterkupplung 10 weist ferner ein Deckelabschnitt 14 auf, in dem ein Luftdosierungsregler 15 eingebracht ist.

Die Höhe H_{K} des Befeuchtungskegels 2 ist etwa 3 bis 5 Mal so hoch, wie die Höhe Hₐ der Adapterkupplung 10. An der Unterkante der Adapterkupplung ist in Figur 1 eine Hilfslinie eingezeichnet, welche die Erdoberfläche symbolisieren soll.

Die Adapterkupplung 10 ist demnach flachbauend ausgebildet und die Höhe Hₐ der Adapterkupplung 10 ist in dem vorliegenden Ausführungsbeispiel etwa 4cm, so dass die Adapterkupplung im vollständig erdeingesteckten Zustand des Befeuchtungskegels 2 etwas oberhalb der Oberfläche der Erde gelegen ist.

Wie in der Figur 1 zu erkennen, stellt die Adapterkupplung in diesem Ausführungsbeispiel eine im Wesentlichen zylinderförmige, umfangsgeschlossene Adapterkupplung dar. Entscheidender als die Querschnittsform ist allerdings die Höhe bzw. die kompakte Bauform der Adapterkupplung und deren universelle Verwendbarkeit in der Anordnung von mehreren Zulauf- und/oder Auslaufstutzen 12, 22. Insofern weist die in Figur 1 gezeigte Adapterkupplung einen Durchmesser D auf, der in etwa der Höhe Hₐ der der Adapterkupplung entspricht.

Die in Figur 1 und 2 gezeigten Zulaufstutzen 12 und Auslaufstutzen 22 der Adapterkupplungen 10 sind im oberen Drittel der Adapterkupplung 10 knapp unterhalb des Deckelabschnittes 14 seitlich in der Adapterkupplungswand angeordnet sind, der im Wesentlichen über die gesamte Oberfläche flach ausgebildet ist.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Denkbar ist, dass man den Dispenser 1 nahezu komplett in der Erde etwa 5 bis 10 cm tief eingräbt oder aber soweit eingräbt, dass nur der Luftdosierregler 15 oberhalb der Erde liegt, wie dies zum Beispiel mit einer Ausführung nach Figur 2 vorteilhaft erfolgen könnte. So können zum Beispiel die Befeuchtungskegel auch eine andere Form aufweisen und sich seitlich aus dem Dispenser 1 zur Seite weg erstrecken, so dass die Befeuchtung über eine größeres horizontales Flächensegement in die Erde erfolgen kann.

## Patentansprüche

1. Modular erweiterbares Bodenbefeuchtungssytem aus wenigstens einem Dispenser (1) mit einem in die Erde einsteckbaren Befeuchtungskegel (2) zur Bewässerung von erdeingepflanzten Pflanzen bestehend aus einer Adapterkupplung (10), die im erdeingesteckten Zustand bestimmungsgemäß oberirdisch angeordnet ist, ausgebildet mit einem kragenförmigen Einsteckabschnitt (11) in den der Bewässerungskegel (2) den Einsteckabschnitt (11) abdichtend eingesetzt ist, wobei die Adapterkupplung (10) wenigstens einen seitlich angeordneten Zulaufstutzen (12) mit einem Schlauchanschlussteil (13) für die Zuführung von Wasser von einer externen Wasservorratsquelle (20) aufweist und wobei die Adapterkupplung (10) wenigstens einen seitlichen Auslaufstutzen (22) mit einem Schlauchanschlussteil (23) zur Weiterleitung von Wasser aufweist und wobei die Adapterkupplung (10) ein Deckelabschnitt (14) besitzt in dem ein Luftdosierungsregler (14) eingebracht ist.

2. Bodenbefeuchtungssytem gemäß Anspruch 1, **dadurch gekennzeichnet, dass** das Bodenbefeuchtungssytem aus einer Mehrzahl von Dispensern (1), die mit Schläuchen (30) miteinander verbunden sind, gebildet ist.

3. Bodenbefeuchtungssytem gemäß Anspruch 2, **dadurch gekennzeichnet, dass** das Bodenbefeuchtungssytem als externe Wasservorrastquelle (20) wenigstens eine Wasserfüllpatrone (40) mit einem Auslaufstutzen aufweist, die mit wenigstens einem Zulaufstutzen (12) eines Dispensers (1) über einen Schlauch (30) zur Zuführung von Wasser fließwirksam verbunden ist.

4. Bodenbefeuchtungssytem gemäß einem der vorhergehenden Ansprüche, **dadurch gekennzeichnet, dass** der Befeuchtungskegel (2) eine wasserdurchlässige Wand im Wesentlichen über die gesamte Höhe H_{K} aufweist und diese Höhe die mögliche Einstecktiefe des Befeuchtungskegels (2) in die Erde definiert.

5. Bodenbefeuchtungssytem gemäß einem der vorhergehenden Ansprüche, **dadurch gekennzeichnet, dass** die Höhe H_{K} des Befeuchtungskegels (2) etwa 3 bis 5 Mal so hoch sind wie die Höhe Hₐ der Adapterkupp-lung (10).

6. Bodenbefeuchtungssytem gemäß einem der vorhergehenden Ansprüche, **dadurch gekennzeichnet, dass** die Adapterkupplung (10) flachbau-end ausgebildet ist und die Höhe Hₐ der Adapterkupplung (10) etwa 1 cm bis 5 cm ist, so dass die Adapterkupplung im vollständig erdeingesteckten Zustand des Befeuchtungskegels (2) etwas oberhalb der Oberfläche der Erde ist.

7. Bodenbefeuchtungssytem gemäß einem der vorhergehenden Ansprüche, **dadurch gekennzeichnet, dass** die Adapterkupplung (10) eine im Wesentlichen zylinderförmige, umfangsgeschlossene Adapterkupplung (10) aus Kunststoff oder Metall darstellt, vorzugsweise aus lichtundurchlässigem Material.

8. Bodenbefeuchtungssytem gemäß einem der vorhergehenden Ansprüche 6 oder 7, **dadurch gekennzeichnet, dass** die Adapterkupplung (10) einen Durchmesser D aufweist, der in etwa 0,8 bis 1,2 x der Höhe Hₐ der der Adapterkupplung (10) entspricht.

9. Bodenbefeuchtungssytem gemäß einem der vorhergehenden Ansprüche 1 bis 8, **dadurch gekennzeichnet, dass** der oder die Zulaufstutzen (12) und/oder der oder die Auslaufstutzen (22) der Adapterkupplung (10) im oberen Drittel der Adapterkupplung (10) knapp unterhalb des Deckelabschnittes (14) angeordnet sind, der im Wesentlichen über die gesamte Oberfläche flach ausgebildet ist.
